# EUROPÄISCHE PATENTSCHRIFT

(11) **EP 1 742 029 B1**
(45) Veröffentlichungstag und Bekanntmachung des Hinweises auf die Patenterteilung: **11.04.2012**
(21) Anmeldenummer: 06114089.3
(22) Anmeldetag: 17.05.2006
(51) Int. Cl.: G01L 1/26, G01L 1/14, G01G 19/414

(54) **Kraftmessvorrichtung und Verwendung einer Kraftmessvorrichtung**
Force measuring device and use of a force measuring device
Dispositif de mesure de force et utilisation d'un dispositif de mesure de force

(30) Priorität: 07.07.2005 DE 102005032475
(43) Veröffentlichungstag der Anmeldung: 10.01.2007
(73) Patentinhaber: BAG Bizerba Automotive GmbH, 72336 Balingen (DE)
(72) Erfinder: Metzger, Frank, 72461 Albstadt (DE); Merz, Andreas, 72365 Ratshausen (DE); Baltinger, Jörg, 72336 Balingen (DE); Engelhardt, Marcus, 72336 Balingen (DE)
(74) Vertreter: Hoeger, Stellrecht & Partner Patentanwälte

(56) Entgegenhaltungen:
- WO-A-2004/083792
- DE-A1- 2 117 424
- DE-A1- 10 252 224

## Beschreibung

Die Erfindung betrifft eine Kraftmessvorrichtung zur Messung der Kraft zwischen einem ersten Element und einem zweiten Element einer Anwendung, umfassend einen Kraftaufnehmer mit einem Biegeelement, wobei der Kraftaufnehmer an dem ersten Element fixierbar ist, eine Hülse, welche mit dem Biegeelement über einen Verbindungsbereich verbunden ist und welche den Kraftaufnehmer mindestens teilweise umgibt, wobei die Hülse an dem zweiten Element fixierbar ist, und eine Sicherungseinrichtung zum Halten der Hülse an dem Kraftaufnehmer bei Bruch des Biegeelements.

Die Hülse ist beispielsweise als Krafteinleitungseinrichtung ausgebildet, über die sich Kräfte in das Biegeelement einleiten lassen, wobei das Biegeelement elastisch verformbar ist. Diese elastische Verformung bewirkt eine Auslenkung beispielsweise eines Sensors relativ zu einem Geber. Aus dieser Auslenkung kann dann die eingeleitete Kraft ermittelt werden.

Aus der DE 21 17 424 ist eine Kraftmessdose zum Messen von Zug- oder Druckkräften mit einem Messelement, an dem Dehnungsmessgeber angeordnet sind, bekannt. Es ist ein dem Messelement parallel geschalteter Kraftaufnehmer vorgesehen, welcher eine erheblich größere Steifigkeit als das Messelement aufweist.

Aus der DE 891 033 ist ein mehrteiliger, überlastungssicherer Messkörper zur Messung mechanischer Kräfte bekannt, bei dem diejenigen starren Teile des Körpers, auf welche die zu messenden Kräfte wirken, so durch Gewinde miteinander verbunden sind, dass das axiale Spiel des Gewindes das Maß der elastischen Verformung der oder des zwischen diese beiden starren Teile eingespannten elastischen Verformungskörpers beidseitig begrenzet.

Aus der DE 102 42 251 A1 ist ein Kraftsensor bekannt, bei dem eine Kraftmesszelle zwischen zwei Gestellteilen zur Messung der Kräfte zwischen den Gestellteilen angeordnet ist, wobei die Kraftmesszelle ein magnetfeldempfindliches Sensorelement aufweist und wobei die Kraftmesszelle ein hohlzylindrisches Biegeelement enthält, das aufgrund der zu erfassenden Krafteinwirkung eine Beeinflussung des magnetischen Felds im Bereich des magnetfeldempfindlichen Sensorelements der Kraftmesszelle bewirkt, wobei das hohlzylindrische Biegeelement einen am relativ ortsfesten Ende an einem ersten Gestellteil befestigten Stab mit einem Magneten an seinem freien Ende enthält. Das magnetfeldempfindliche Sensorelement ist durch die Kraft im Feld des Magneten auslenkbar und das an einem Gestellteil gehaltene Biegeelement ragt in einen am anderen Gestellteil gehaltenen Topf hinein, wobei der Topf im Bereich der Halterung am anderen Gestellteil einen sich radial erstreckenden Innenbund aufweist, der radial eine im Inneren des Topfs befindliche Durchmessererweiterung des Biegeelements überlappt. Der Innenbund ist so dimensioniert, dass im Falle eines Bruchs des Biegeelements durch den axialen Anschlag des Innenbunds das Biegeelement nicht abgetrennt wird.

Aus der DE 102 52 224 A1 ist ein Kraftmesser insbesondere zur Sitzgewichtsbestimmung in einem Kraftfahrzeug bekannt, mit einem Aufnahmeelement, welches zwei voneinander beabstandete Lagerstellen aufweist, mit einer Ausnehmung im Aufnahmeelement im Bereich zwischen den zwei Lagerstellen, mit einem nicht von Biegekräften beaufschlagten stabförmigen Element, dessen freies Ende bei einer Beaufschlagung des Aufnahmeelements mit einer zu messenden Kraft ausgelenkt wird, und mit einer Messanordnung zur Erkennung der Auslenkung des freien Endes des stabförmigen Elements, wobei die Messanordnung einen Magneten und einen magnetfeldempfindlichen Sensor umfasst, wobei der Magnet und der magnetfeldempfindliche Sensor ortsfest zueinander angeordnet sind, und wobei der Magnet nah beabstandet zu ferromagnetischem Material angeordnet ist. Der Magnet ist innerhalb einer länglichen Ausnehmung des ferromagnetischen Materials angeordnet und die Längsachse der Ausnehmung erstreckt sich quer zur Richtung der zu messenden Kraft und zur Erstreckung des stabförmigen Elements.

Aus der WO 2004/083792 A1 ist eine Kraftmesszelle mit einem elastisch verformbaren Kraftaufnehmer zur Aufnahme einer Gewichtskraft und einer Sensoranordnung zur Erfassung der Kraftaufnehmerverformung und deren Umwandlung in ein elektrisches Wägesignal bekannt, wobei der Kraftaufnehmer an einem ersten Ende mit einem Montageteil verbunden ist und an seinem zweiten Ende ein Krafteinleitungsteil trägt. Der Kraftaufnehmer ist als Hohlstab mit zwei in Längsrichtung des Stabs beabstandeten Schwächungszonen ausgebildet.

Davon ausgehend liegt der Erfindung die Aufgabe zugrunde, die eingangs genannte Kraftmessvorrichtung so zu verbessern, dass sie auf einfache Weise erstellbar ist und die Sicherungseinrichtung eine große Haltefähigkeit aufweist.

Diese Aufgabe wird bei der eingangs genannten Kraftmessvorrichtung erfindungsgemäß dadurch gelöst, dass die Sicherungseinrichtung durch eine Gewindeeinrichtung zwischen der Hülse und dem Kraftaufnehmer gebildet ist, welche beabstandet zu dem Verbindungsbereich ist, wobei die Gewindeeinrichtung nicht-tragend ist, so dass sich Gewindeelemente der Hülse und Gewindeelemente des Kraftaufnehmers nicht berühren und dass ein Fixierungsbereich für das zweite Element an einer Außenseite der Hülse mindestens teilweise der Gewindeeinrichtung gegenüberliegend angeordnet ist.

Die Gewindeeinrichtung lässt sich so ausgestalten, dass in ihrem Bereich die Hülse und der Kraftaufnehmer sich "im Normalbetrieb" nicht berühren. Dadurch wird die Kraftmessung durch die Gewindeeinrichtung nicht beeinflusst. Durch eine solche freigängige Gewindeeinrichtung lässt sich aber bei Bruch des Biegeelements die Hülse an dem Kraftaufnehmer halten. Dadurch ist für eine relative Haltekraft zwischen dem zweiten Element und dem ersten Element gesorgt.

Wenn beispielsweise die Anwendung ein Fahrzeugsitz ist und das erste Element und das zweite Element Gestellelemente sind, wobei beispielsweise das erste Element an der Fahrzeugkarosserie fixiert ist, dann lässt sich bei Bruch des Biegeelements ein "Wegbruch" des Fahrzeugsitzes von der Fahrzeugkarosserie aufgrund der Haltekraft der Sicherungseinrichtung verhindern.

Bei der erfindungsgemäßen Lösung erfolgt bei Bruch des Biegeelements die Sicherung gegen Wegbrechen aufgrund eines Gewindes mit einer Mehrzahl von Gewindeelementen, welche aneinander anliegen können. Dadurch ist die Sicherungswirkung größer als bei einem Innenbund.

Die Gewindeeinrichtung dient auch als Überlastschutz für das Biegeelement. Wenn beispielsweise bei einem Unfall hohe Kräfte auftreten, dann wirkt das Gewinde als Überlastschutz mit einer (kurzzeitigen) Berührung gegenüberliegender Gewindeelemente. Dadurch lässt sich die Bruchgefahr für das Biegeelement verringern. Der Überlastschutz aufgrund der Gewindeeinrichtung ist größer als bei dem Vorsehen nur eines Überlastrings.

Weiterhin lässt sich die erfindungsgemäß Kraftmessvorrichtung (die insbesondere als Kraftmesszelle ausgestaltet sein kann oder eine solche umfassen kann) auf einfache Weise herstellen und montieren. Es müssen keine Sicherungsringe zur Fixierung des ersten Elements und des zweiten Elements vorgesehen werden. Es muss keine Schweißung zur Herstellung der Sicherungseinrichtung vorgesehen werden. Eine Gewindeeinrichtung lässt sich auf einfache Weise durch konventionelle Verfahren herstellen.

Weiterhin ist es nicht notwendig, dass ein Dichtungsring zwischen dem ersten Element und dem zweiten Element positioniert wird. Solch ein Dichtungsring kann die Kraftmessung beeinflussen, da er an dem ersten Element und an dem zweiten Element dichtend anliegen muss. Weiterhin ist die Montage der Kraftmessvorrichtung durch einen solchen Dichtring erschwert.

Die erfindungsgemäße Kraftmessvorrichtung lässt sich auch auf einfache Weise an einer Anwendung montieren.

Ein Fxierungsbereich für das zweite Element ist an einer Außenseite der Hülse mindestens teilweise der Gewindeeinrichtung gegenüberliegend angeordnet. Dadurch lassen sich die. Hebelkräfte gering halten, wenn das Biegeelement gebrochen ist und über die Gewindeeinrichtung die Hülse mit dem zweiten Element an dem Kraftaufnehmer (welcher mit dem ersten Element fixiert ist) gehalten werden muss.

Insbesondere ist es günstig, wenn die Gewindeeinrichtung eine Mehrzahl von Windungen umfasst. Dadurch ist eine Mehrzahl von Anlagebereichen bereitgestellt, über die die Hülse an dem Kraftaufnehmer gehalten werden kann, wenn es zu einem Bruch des Biegeelements gekommen ist. Die Haltewirkung wird dadurch verbessert.

Insbesondere ist die Hülse mit einem Innengewinde versehen. Ein solches Innengewinde lässt sich auf einfache Weise über konventionelle Gewindeschneidverfahren herstellen.

Insbesondere liegen Gewindeflanken des Innengewindes auf gleicher Ebene mit einer Innenseite der Hülse oder sind gegen diese zurückgesetzt. Dadurch lässt sich die Hülse auf einfache Weise ausgestalten. Beispielsweise ist diese mindestens näherungsweise hohlzylindrisch ausgestaltet.

Es kann vorgesehen sein, dass Gewindenuten des Innengewindes größere Abmessungen aufweisen als bei einem Normgewinde. Dadurch lässt sich auf einfache Weise eine freigängige Gewindeeinrichtung herstellen. Es ist dabei alternativ oder zusätzlich möglich, dass Gewindenuten des Außengewindes größere Abmessungen aufweisen als bei einem Normgewinde.

Günstig ist es, wenn der Kraftaufnehmer mit einem Außengewinde versehen ist. Ein solches Außengewinde lässt sich auf einfache Weise an dem Kraftaufnehmer herstellen.

Insbesondere ist das Außengewinde ein Normgewinde. Beispielsweise ist das Außengewinde als M12-Gewinde hergestellt. Ein solches Gewinde lässt sich auf einfache Weise herstellen.

Ganz besonders vorteilhaft ist es, wenn zwischen Gewindenuten der Gewindeeinrichtung und in die Gewindenuten eingetauchten Gewindeflanken der Gewindeeinrichtung ein Freiraum liegt. Durch diesen Freiraum ist verhindert, dass sich Gewindeelemente des Außengewindes und des Innengewindes berühren. Dadurch wird die Kraftmessung nicht beeinflusst. Bei Bruch des Biegeelements lässt sich dadurch ein sicheres Halten der Hülse an dem Kraftaufnehmer und damit ein sicheres Halten des zweiten Elements relativ zum ersten Element erreichen. Außerdem wird ein Überlastanschlag mit großer Anschlagsfläche bereitgestellt.

Es hat sich als vorteilhaft erwiesen, wenn der Abstand zwischen Gewindeflanken und Gewindenuten im Bereich zwischen 0,1 mm und 0,2 mm liegt. Beispielsweise liegt er in der Größenordnung von ca. 0,15 mm.

Insbesondere liegt der Verbindungsbereich zwischen der Hülse und dem Kraftaufnehmer an einem Endbereich des Kraftaufnehmers und/oder der Hülse. Dadurch lässt sich die Verbindung zwischen dem Biegeelement und der Hülse auf einfache Weise beispielsweise über einen Pass-Sitz herstellen.

Günstig ist es, wenn die Gewindeeinrichtung an einem Endbereich der Hülse angeordnet ist. Dadurch lässt sich über einen großen Bereich ein "Wegbrechen" der Hülse von dem Kraftaufnehmer verhindern, wenn das Biegeelement bricht.

Bei einer Ausführungsform ist die Hülse als Krafteinleitungseinrichtung zur Einleitung von Kräften von dem zweiten Element in das Biegeelement ausgebildet. Es ist grundsätzlich auch möglich, dass Kräfte über das erste Element in das Biegeelement einleitbar sind.

Insbesondere ist die Hülse mit dem Kraftaufnehmer an dem Verbindungsbereich über einen Pass-Sitz verbunden. Dadurch lässt sich die Verbindung auf einfache Weise herstellen. Weiterhin kann dann die Hülse mittels der Gewindeeinrichtung auf den Kraftaufnehmer aufgeschraubt werden.

Insbesondere ist das Biegeelement dem Gewindeeinrichtungs-Anteil des Kraftaufnehmers axial folgend am Kraftaufnehmer angeordnet. Dadurch lässt sich eine effektive Sicherung bezüglich Wegbrechen der Hülse vom Kraftaufnehmer erreichen.

Insbesondere ist der Gewindeeinrichtungs-Anteil des Kraftaufnehmers außerhalb des Biegeelements angeordnet. Dadurch beeinflusst die Gewindeeinrichtung die Kraftmessung nicht. Außerdem ist außerhalb des Biegeelements ein ausreichender Materialbereich bereitgestellt, an dem ein Gewinde hergestellt werden kann.

Günstig ist es, wenn der Kraftaufnehmer ein Montageteil aufweist, welches an dem ersten Element fixierbar ist. Dadurch lässt sich eine einfache Fixierbarkeit erreichen.

Insbesondere weist das Montageteil einen Fixierungsbereich für das erste Element auf. Beispielsweise umfasst der Fixierungsbereich ein Gewinde, an dem eine Mutter aufsetzbar ist. Das erste Element lässt sich dann über die Mutter mit dem Kraftaufnehmer fixieren.

Insbesondere ist die Gewindeeinrichtung zwischen dem Fixierungsbereich des Montageteils und dem Biegeelement angeordnet. Dadurch lässt sich das Montageteil, welches sowieso genügend massiv ausgestaltet sein muss, um eine stabile Fixierung mit dem ersten Element zu erreichen, auch dazu nutzen, um die Sicherungseinrichtung bereitzustellen.

Besonders vorteilhaft ist es, wenn das Montageteil einen Anlageflansch für das erste Element aufweist. Das erste Element weist insbesondere eine Ausnehmung auf, durch die das Montageteil mindestens teilweise durchschiebbar ist. Durch den Anlageflansch ist dann ein Anlegen des ersten Elements an das Montageteil möglich und ein weiteres Durchschieben gesperrt. Dadurch lässt sich dann über ein Befestigungselement wie eine Mutter das erste Element mit dem Kraftaufnehmer verklemmen. Bei der erfindungsgemäßen Lösung lässt sich bei der Herstellung der Verbindung zwischen der Hülse und dem Kraftaufnehmer die Hülse von einem vorderen Ende des Kraftaufnehmers auf den Kraftaufnehmer aufschieben und aufdrehen. Der Anlageflansch behindert diese Verbindungsherstellung nicht.

Insbesondere ist die Gewindeeinrichtung so ausgebildet, dass die Hülse in einer Richtung auf den Kraftaufnehmer aufsetzbar ist, welche bei montierter Kraftmessvorrichtung der Abstandsrichtung zwischen dem zweiten Element und dem ersten Element vom zweiten Element zum ersten Element entspricht. Dadurch lässt sich die Hülse von vorne in Richtung eines Montageteils des Kraftaufnehmers auf den Kraftaufnehmer aufsetzen. In einer bestimmten Position ist ein Pass-Sitz der Hülse an dem Kraftaufnehmer erreicht, wobei in dieser bestimmten Position die Gewindeeinrichtung nicht-tragend, das heißt freigängig ist.

Ganz besonders vorteilhaft ist es, wenn der Kraftaufnehmer so ausgebildet ist, dass er in einer Richtung in eine Ausnehmung des ersten Elements einschiebbar ist, welche bei montierter Kraftmessvorrichtung der Abstandsrichtung zwischen dem zweiten Element und dem ersten Element vom zweiten Element zum ersten Element entspricht. Dies ist insbesondere vorteilhaft, wenn die Anwendung ein Fahrzeugsitz ist. Beispielsweise lässt sich dann die Kraftmessvorrichtung über die Hülse an einem zweiten Gestellelement fixieren. Anschließend lässt sich der Kraftaufnehmer in die Ausnehmung einschieben und dort beispielsweise über eine Mutter fixieren. Dadurch ist die Montage eines Fahrzeugsitzes an einer Fahrzeugkarosserie erleichtert.

Insbesondere ist das Biegeelement mindestens näherungsweise hohlzylindrisch ausgebildet mit einem Innenraum. In dem Innenraum lässt sich beispielsweise eine Geber-Sensor-Anordnung positionieren.

Es ist entweder ein Geber oder Sensor mit dem Montageteil des Kraftaufnehmers verbunden und entweder ein Sensor oder ein Geber mit dem Biegeelement verbunden. Durch eine Krafteinleitung (beispielsweise über die Hülse oder über das erste Element) in das Biegeelement und die daraus resultierende Verformung lässt sich die Relativposition zwischen Geber und Sensor ändern und dadurch lässt sich ein Signal bzw. eine Signaländerung generieren, welche abhängig von der eingeleiteten Kraft ist. Daraus wiederum kann die wirkende Kraft ermittelt werden.

Ganz besonders vorteilhaft ist es, wenn ein Sensor gekapselt ist, wobei insbesondere die Sensorelektronik mitgekapselt ist. Dadurch ist kein besonderer Dichtungsaufwand notwendig. Insbesondere muss kein Dichtungsring zwischen dem ersten Element und dem zweiten Element vorgesehen werden; ein solcher Dichtungsring ist schwierig zu montieren und kann auch die Kraftmessung beeinflussen, da er die Relativbeweglichkeit zwischen dem ersten Element und dem zweiten Element behindern kann.

Der Kraftaufnehmervorrichtung können ein oder mehrere Abstandshalter zwischen dem ersten Element und dem zweiten Element zugeordnet sein. Ein Abstandshalter wird insbesondere an das erste Element und an das zweite Element angelegt, um diese - ohne wesentliche Beeinflussung der Kraftmessung - auf Distanz zu halten.

Beispielsweise ist die Anwendung ein Sitz, wobei das erste Element und das zweite Element Gestellelemente des Sitzes sind. Insbesondere handelt es sich bei dem Sitz um einen Fahrzeugsitz. Die Kraftermittlung ist dann insbesondere eine Gewichtskraftermittlung.

Die erfindungsgemäße Kraftmessvorrichtung lässt sich vorteilhaft für Automotiv-Anwendungen verwenden. Insbesondere lässt sie sich zur Kraftbestimmung an einem Sitz verwenden, wobei der Sitz beispielsweise ein Fahrzeugsitz ist.

Die nachfolgende Beschreibung bevorzugter Ausführungsformen dient im Zusammenhang mit der Zeichnung der näheren Erläuterung der Erfindung.

### Die einzige

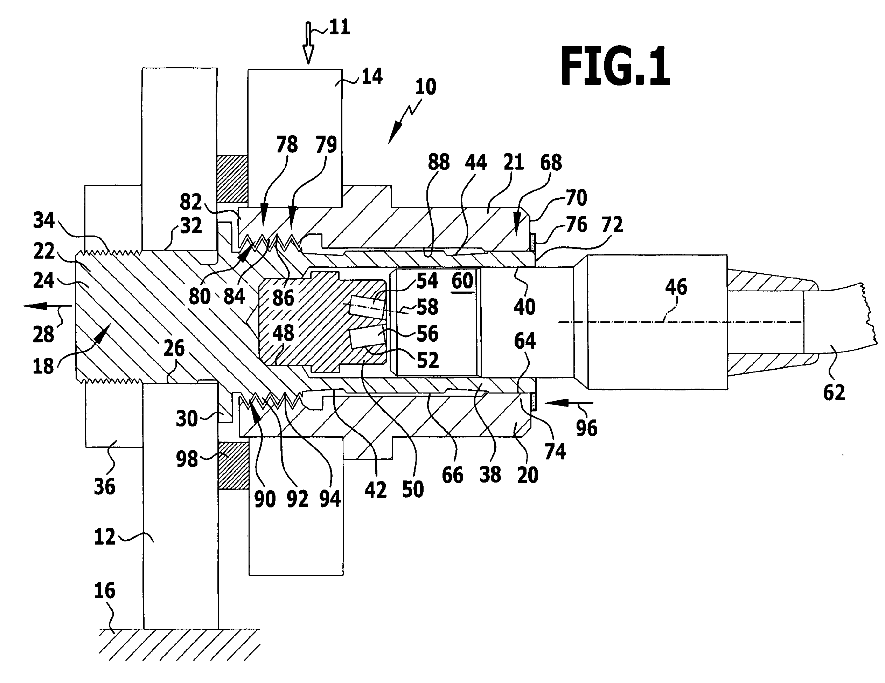

- Figur 1: zeigt eine schematische seitliche Schnittansicht eines Ausführungsbeispiels einer erfindungsgemäßen Kraftmessvorrichtung, welche als Kraftmesszelle ausgebildet ist.

Ein Ausführungsbeispiel einer erfindungsgemäßen Kraftmessvorrichtung, welches in Figur 1 gezeigt ist, ist als Kraftmesszelle ausgebildet. Die Kraftmessvorrichtung 10 dient zur Messung einer Kraft 11 zwischen einem ersten Element 12 und einem zweiten Element 14 einer Anwendung. Bei der Anwendung handelt es sich beispielsweise um einen Sitz und insbesondere um einen Fahrzeugsitz. Das erste Element 12 und das zweite Element 14 sind dann Gestellelemente des Sitzes. Die Kraft 11 ist insbesondere eine Gewichtskraft, die auf den Sitz ausgeübt wird.

Das erste Element 12 ist insbesondere ein Gestellelement, welches mit einer Fahrzeugkarosserie 16 direkt oder indirekt verbunden ist. Das zweite Element 14 ist mit einem Sitzbereich des Fahrzeugsitzes verbunden. Zwischen dem ersten Element 12 und dem zweiten Element 14 können weitere Elemente wie beispielsweise Sitzschienen angeordnet sein.

Die Kraftmessvorrichtung 10 umfasst einen Kraftaufnehmer 18 und eine Hülse 21. Der Kraftaufnehmer 18 ist zur Fixierung an dem ersten Element 12 vorgesehen. Die Hülse 21 ist zur Fixierung an dem zweiten Element 14 vorgesehen und umgibt den Kraftaufnehmer 18 und ist mit diesem verbunden. In dem gezeigten Ausführungsbeispiel ist die Hülse 21 als Krafteinleitungseinrichtung 20 ausgebildet, über die Kräfte von dem zweiten Element 14 in den Kraftaufnehmer 18 einleitbar sind.

Es ist grundsätzlich auch möglich, die Krafteinleitung über das erste Element 12 durchzuführen. Das zweite Element 14 wäre in diesem Falle feststehend (und beispielsweise mit der Fahrzeugkarosserie 16 verbunden).

Der Kraftaufnehmer 18 umfasst und umgibt ein Montageteil 22 mit einem zylindrischen Bereich 24. Dieser zylindrische Bereich 24 ist in eine Ausnehmung 26 des ersten Elements 12 einschiebbar, wobei die Richtung 28 der Einschiebbarkeit die Abstandsrichtung zwischen dem zweiten Element 14 zum ersten Element 12 vom zweiten Element 14 zum ersten Element 12 ist. Der zylindrische Bereich 24 weist eine axiale Höhe auf, welche größer ist als die axiale Höhe der Ausnehmung 26.

Es kann vorgesehen sein, dass die Ausnehmung 26 nicht rotationssymmetrisch ausgebildet ist und der Bereich 24 an diese Form angepasst ist. Dadurch lässt sich eine Verdrehsicherung bereitstellen.

Dem zylindrischen Bereich 24 nächstliegend weist das Montageteil 22 einen ringförmigen Flansch 30 auf, welcher einen größeren Durchmesser hat als der zylindrische Bereich 24. Das erste Element 12 ist an den Flansch 30 anlegbar, der somit als Anlageflansch dient.

An dem zylindrischen Bereich 24 ist ein Fixierungsbereich 32 für das erste Element 12 gebildet. Dieser Fixierungsbereich 32 umfasst mindestens teilweise ein Gewinde 34, auf welches eine Mutter 36 aufschraubbar ist. Das erste Element 12 lässt sich dadurch zwischen dem Flansch 30 und der Mutter 36 einspannen.

An dem Montageteil 22 ist ein Biegeelement 38 angeordnet. Dieses Biegeelement 38 ist hohlzylindrisch insbesondere in Form eines Hohlstabs ausgebildet mit einem Innenraum 40, welcher mindestens näherungsweise die Form eines Hohlzylinders hat. Der Kraftaufnehmer 18 ist über das Biegeelement 38 elastisch verformbar. Dadurch kann der Kraftaufnehmer 18 Kräfte wie beispielsweise Gewichtskräfte aufnehmen.

Das Biegeelement 38 hat eine erste Schwächungszone 42 und beabstandet zu dieser eine zweite Schwächungszone 44. Diese Schwächungszonen 42, 44 sind durch Ausnehmungen an einer Außenseite des Biegeelements 38 gebildet. Sie sind in einer axialen Längsrichtung beabstandet zueinander angeordnet.

Die Schwächungszonen 42, 44 sind ringförmig oder kegelförmig ausgebildet. Durch die Schwächung der Wandung des Biegeelements 38 werden Gelenkstellen gebildet, die dem Kraftaufnehmer 18 die Funktion eines Parallelogramm-Kraftaufnehmers verleihen.

Die Schwächungszonen 42, 44 weisen bei einer Ausführungsform einen Boden auf, welcher bezüglich der Längsrichtung 46 geneigt ist. Der Neigungswinkel liegt beispielsweise in der Größenordnung von 3°. Die Neigung der Schwächungszonen 42 und 44 ist dabei vorzugsweise entgegengerichtet. Durch die Neigung lässt sich eine bessere Symmetrie für die Parallelogramm-Auslenkung erreichen.

Das Montageteil 22 weist eine ringförmige Ausnehmung 48 auf, in welcher eine Gebereinrichtung 50 mit einem beispielsweise magnetischen Geber 52 sitzt. Die Ausnehmung 48 sitzt im Innenraum 40 des Biegeelements 38 bzw. weist diesem zu. Die Gebereinrichtung 50 sitzt ohne Kontakt mit der Wandung des Biegeelements 38 in dem Innenraum 40.

Der magnetische Geber 52 kann einen oder mehrere Permanentmagnete aufweisen. Beispielsweise kann die Gebereinrichtung 50 so ausgebildet sein, wie sie in der nicht-vorveröffentlichten deutschen Patentanmeldung Nr. 10 2005 016 432.3 vom 5. April 2005 der gleichen Anmelderin beschrieben ist. Dort ist eine Gebereinrichtung offenbart, welche mindestens einen ersten Permanentmagneten 54 und einen zweiten Permanentmagneten 56 umfasst, welche jeweils über eine Längsrichtung 58 einen im wesentlichen konstanten geometrischen Querschnitt aufweisen, und wobei der erste Permanentmagnet 54 und der zweite Permanentmagnet 56 in einem Winkel zueinander angeordnet sind.

Es sind auch andere Ausgestaltungen der Gebereinrichtung 50 möglich.

In dem Innenraum 50 sitzt ferner ein Sensor 60, welcher insbesondere mit der Wand des Biegeelements 38 beispielsweise durch Pass-Sitz und eine Schweißnaht verbunden ist. Wenn aufgrund einer Krafteinwirkung das Biegeelement 38 elastisch verformt wird, dann bewegt sich der Sensor 60 relativ zu der Gebereinrichtung 50. Daraus resultiert ein Signal bzw. eine Signaländerung, die abhängig von der eingeleiteten Kraft und damit von der zu messenden Kraft 11 ist.

Bei dem Sensor 60 handelt es sich insbesondere um einen Magnetfeldsensor wie beispielsweise einem Hall-Sensor.

Der Sensor 60 ist mit seiner Elektronik vorzugsweise gekapselt ausgebildet, so dass er gegenüber Fluidzutritt und dergleichen geschützt ist.

Sensorsignale werden über eine Leitung oder Leitungsstrang 62 abgeleitet. Über diesen Leitungsstrang 62 wird der Sensor auch mit Energie versorgt.

Der Kraftaufnehmer 18 ist von der Krafteinleitungseinrichtung 20 topfförmig umgeben. Die Krafteinleitungseinrichtung 20 ist dazu mindestens näherungsweise hohlzylindrisch ausgebildet. Die Ausbildung und Anordnung der Krafteinleitungseinrichtung 20 bezüglich dem Kraftaufnehmer 18 ist dabei so, dass sie diesen außerhalb eines Verbindungsbereichs 64 nicht berührt, das heißt dass ein Freiraum 66 zwischen der Krafteinleitungseinrichtung 20 und dem Kraftaufnehmer 18 außerhalb des Verbindungsbereichs 64 vorliegt. Ein typischer Abstand der Krafteinleitungseinrichtung 20 und des Kraftaufnehmers 18 in diesem Freiraum liegt zwischen 0,1 mm und 0,2 mm und insbesondere bei ca. 0,15 mm.

Die Krafteinleitungseinrichtung 20 ist an dem Kraftaufnehmer 18 über einen Pass-Sitz 68 gehalten. Dieser Pass-Sitz 68 erfolgt in dem Verbindungsbereich 64. Der Verbindungsbereich 64 liegt an bzw. in der Nähe eines vorderen Endes 70 der Krafteinleitungseinrichtung 20 und an bzw. in der Nähe eines vorderen Endes 72 des Kraftaufnehmers 18. Zur Ausbildung des Pass-Sitzes 68 ist die Krafteinleitungseinrichtung 20 mit einem ringförmigen Innenflansch 74 versehen, welcher einen Innendurchmesser aufweist, der an das Biegeelement 38 angepasst ist und an diesem in dem Verbindungsbereich 64 anliegt.

An einer Außenseite des Ringflansches 74 kann zwischen der Krafteinleitungseinrichtung 20 und dem Kraftaufnehmer 18 eine Schweißnaht 76 vorgesehen sein, um die Passverbindung zwischen der Krafteinleitungseinrichtung 20 und dem Kraftaufnehmer 18 zu sichern und für eine Abdichtung zu sorgen.

Das erste Element 12 und das zweite Element 14 sind über die Kraftmessvorrichtung miteinander fixiert. Das zweite Element 14 ist über die Krafteinleitungseinrichtung 20 und den Pass-Sitz 68 mit dem Biegeelement 38 verbunden. Bei einem Bruch des Biegeelementes 38 besteht deshalb die Gefahr, dass die Fixierung des zweiten Elements 14 relativ zum ersten Element 12 zerstört wird. Ein Bruch des Biegeelements 38 kann beispielsweise bei der Anwendung eines Fahrzeugsitzes während eines Unfalls auftreten.

Um für ein Halten der Krafteinleitungseinrichtung 20 an dem Kraftaufnehmer 18 und damit für ein relatives Halten des zweiten Elements 14 an dem ersten Element 12 auch dann zu sorgen, wenn das Biegeelement 38 bricht, ist eine Sicherungseinrichtung 78 vorgesehen, welche eine Gewindeeinrichtung 79 umfasst.

Die Gewindeeinrichtung 79 ist beabstandet zu dem Verbindungsbereich 64. Sie umfasst einen Kraftaufnehmer-Anteil und einen Hülsen-Anteil.

Der Hülsen-Anteil ist durch ein Innengewinde 80 gebildet, welches im Bereich eines hinteren Endes 82 der Krafteinleitungseinrichtung 20 an deren Innenseite angeordnet ist. Das hintere Ende 82 liegt dem vorderen Ende 70 gegenüber. Dieses Innengewinde umfasst einen Gewindegang mit Gewindeflanken 84 und zwischen Gewindeflanken 84 liegende Gewindenuten 86. Die Gewindeflanken 84 sind bezüglich einer Innenseite 88 der Krafteinleitungseinrichtung 20 zurückgesetzt oder liegen höchstens auf der gleichen Ebene wie die Innenseite 88.

Das Innengewinde 80 ist kein Normgewinde. Es lässt sich über ein Normgewinde herstellen, indem entsprechend ein "Vorgewinde" als Normgewinde (beispielsweise M12) geschnitten wird und dann die Gewindenuten 86 beispielsweise mit einem Drehmeißel aufgestrählt werden. Die Gewindenuten 86 weisen dadurch größere Abmessungen auf als bei einem Normgewinde.

Es sind dabei eine Mehrzahl von Windungen vorgesehen.

Der Kraftaufnehmer-Anteil der Gewindeeinrichtung 79 ist durch ein Außengewinde 90 gebildet, welches an dem Montageteil 20 zwischen dem Flansch 30 und dem Biegeelement 38 außerhalb des Biegeelements 38 angeordnet ist. Das Außengewinde 90 umfasst Gewindeflanken 92 und Gewindenuten 94, welche zwischen Gewindeflanken liegen. In die Gewindenuten 94 des Außengewindes 90 sind Gewindeflanken 84 des Innengewindes 80 eingetaucht. Auf die gleiche Weise sind Gewindeflanken 92 des Außengewindes 90 in Gewindenuten 86 des Innengewindes 80 eingetaucht.

Bei dem Außengewinde 90 handelt es sich insbesondere um ein Normgewinde wie beispielsweise M12-Gewinde, welches durch konventionelle Methoden herstellbar ist.

Das Außengewinde 90 und das Innengewinde 80 sind dabei derart aneinander angepasst ausgebildet, dass bei in Gewindenuten eingetauchten Gewindeflanken entsprechende Gewindeelemente sich nicht berühren, sondern ein Freiraum zwischen den entsprechenden Gewindeelementen vorliegt. Der entsprechende Abstand zwischen den Gewindeelementen liegt im Bereich zwischen 0,1 mm und 0,2 mm und insbesondere bei ca. 0,15 mm. Dadurch ist die Gewindeeinrichtung 79 bezüglich der Kopplung der Krafteinleitungseinrichtung 20 an den Kraftaufnehmer 18 nicht-tragend, das heißt freigängig. Bei der Krafteinleitung von der Krafteinleitungseinrichtung 20 in den Kraftaufnehmer 18 berühren sich die Krafteinleitungseinrichtung 20 und der Kraftaufnehmer 18 im Bereich der Gewindeeinrichtung 79 nicht. Der einzige Berührungsbereich ist der Verbindungsbereich 64.

Wenn jedoch das Biegeelement 38 bricht, dann ist die Hülse 21 an den Kraftaufnehmer 18 über die Gewindeeinrichtung 79 gekoppelt, so dass das zweite Element 14 relativ zum ersten Element 12 gehalten ist. Das Biegeelement 38 wird in der Regel an einer Schwächungszone 42, 44 zuerst brechen.

Durch die Gewindeeinrichtung 79 erfolgt also eine Sicherung bezüglich "Wegbrechen" des zweiten Elements 14 vom ersten Element 12. Bei dem Anwendungsfall eines Autositzes erfolgt eine Sicherung gegenüber des Wegbrechens eines Sitzgestells des Autositzes von der Fahrzeugkarosserie 16.

Die Gewindeeinrichtung 79 weist eine Mehrzahl von Windungen auf, so dass ein vergrößerter Anlagebereich und damit eine erhöhte Sicherheit bezüglich des Wegbrechens erreicht ist, das heißt die Haltefähigkeit der erfindungsgemäßen Sicherungseinrichtung 78 ist erhöht. Weiterhin ist der Überlastschutz für das Biegeelement 38 erhöht.

Bei der erfindungsgemäßen Lösung lässt sich für die Herstellung der Kraftmessvorrichtung 10 die Krafteinleitungseinrichtung 20 auf einfache Weise an dem Kraftaufnehmer 18 fixieren, indem diese in einer Richtung 96 aufgeschraubt wird, bis beispielsweise ein definierter Abstand zwischen der Krafteinleitungseinrichtung 20 und dem Kraftaufnehmer 18 erreicht ist oder eine Anschlagsposition erreicht ist. In der entsprechend definierten Stellung ist die Gewindeeinrichtung 79 freigängig. Im Bereich des hinteren Endes 82 der Krafteinleitungseinrichtung 20 sind keine Schweißnähte notwendig und es sind auch keine Sicherungsringe oder dergleichen notwendig.

Es ist grundsätzlich möglich, zwischen dem ersten Element 12 und dem zweiten Element 14 einen Abstandshalter 98 beispielsweise in Form einer Kunststoffscheibe anzuordnen. Es ist dabei günstig, wenn dieser Abstandshalter 98 sehr niedrige Gleitreibungseigenschaften bezüglich der Anlage an das erste Element 12 und das zweite Element 14 aufweist, um die Kraftmessung nicht zu beeinflussen. Es ist möglich, dass der Abstandshalter 98 auch Dichtungseigenschaften hat.

Bei der erfindungsgemäßen Lösung ist jedoch grundsätzlich eine Dichtung nicht erforderlich. Durch die Gewindeeinrichtung 79 wird eine verbesserte Abdichtung erreicht. Weiterhin ist keine Abdichtung notwendig, wenn der Sensor 60 mit seiner Elektronik gekapselt ist.

Erfindungsgemäß wird als Sicherungseinrichtung 78 eine nicht-tragende freigängige Gewindeeinrichtung 79 bereitgestellt, welche beabstandet zu dem Verbindungsbereich 64 zwischen der Krafteinleitungseinrichtung 20 und dem Kraftaufnehmer 18 ist. Durch eine solche Gewindeeinrichtung 79 wird über eine Mehrzahl von Windungen eine hohe Wegbrechsicherheit gewährleistet.

Ferner ist die entsprechende Kraftmessvorrichtung 10 auf einfache Weise herstellbar. Insbesondere ist die Krafteinleitungseinrichtung 20 auf einfache Weise an dem Kraftaufnehmer 18 fixierbar.

Ferner kann die Kraftmessvorrichtung 10 auf einfache Weise mit dem ersten Element 12 und dem zweiten Element 14 verbunden werden. Insbesondere lässt sich die Kraftmessvorrichtung 10 mit dem zweiten Element 14 verbinden und der Kraftaufnehmer 18 lässt sich dann mit dem Montageteil 22 in der Richtung 28 in die Ausnehmung 26 des ersten Elements 12 einschieben und über die Mutter 36 sichern.

Bei der erfindungsgemäßen Lösung ist kein Innenbund notwendig.

Die Kraftmessvorrichtung 10 lässt sich beispielsweise für Automotiv-Anwendungen verwenden. Beispielsweise wird sie für die Kraftmessung und insbesondere Gewichtskraftmessung an Fahrzeugsitzen eingesetzt.

## Patentansprüche

1. Kraftmessvorrichtung zur Messung der Kraft zwischen einem ersten Element (12) und einem zweiten Element (14) einer Anwendung, umfassend einen Kraftaufnehmer (18) mit einem Biegeelement (38), wobei der Kraftaufnehmer (18) an dem ersten Element (12) fixierbar ist, eine Hülse (21), welche mit dem Biegeelement (38) über einen Verbindungsbereich (64) verbunden ist und welche den Kraftaufnehmer (18) mindestens teilweise umgibt, wobei die Hülse (21) an dem zweiten Element (14) fixierbar ist, und eine Sicherungseinrichtung (78) zum Halten der Hülse (21) an dem Kraftaufnehmer (18) bei Bruch des Biegeelements (38),
**dadurch gekennzeichnet , dass** die Sicherungseinrichtung (78) durch eine Gewindeeinrichtung (79) zwischen der Hülse (21) und dem Kraftaufnehmer (18) gebildet ist, welche beabstandet zu dem Vierbindungsbereich (64) ist, wobei die Gewindeeinrichtung (79) nicht-tragend ist, so dass sich Gewindeelemente (84; 86) der Hülse (21) und Gewindeelemente (94; 92) des Kraftaufnehmers (18) nicht berühren und dass ein Fixierungsbereich für das zweite Element (14) an einer Außenseite der Hülse (21) mindestens teilweise der Gewindeeinrichtung (79) gegenüberliegend angeordnet ist.

2. Kraftmessvorrichtung nach Anspruch 1, **dadurch gekennzeichnet, dass** die Gewindeeinrichtung (79) eine Mehrzahl von Windungen umfasst.

3. Kraftmessvorrichtung nach Anspruch 1 oder 2, **dadurch gekennzeichnet, dass** die Hülse (21) mit einem Innengewinde (80) versehen ist.

4. Kraftmessvorrichtung nach Anspruch 3, **dadurch gekennzeichnet, dass** Gewindeflanken (84) des Innengewindes (80) auf gleicher Ebene mit einer Innenseite (88) der Hülse (21) liegen oder gegen diese zurückgesetzt sind.

5. Kraftmessvorrichtung nach einem der vorangehenden Ansprüche, **dadurch gekennzeichnet, dass** der Kraftaufnehmer (18) mit einem Außengewinde (90) versehen ist.

6. Kraftmessvorrichtung nach Anspruch 5, **dadurch gekennzeichnet, dass** das Außengewinde (90) ein Normgewinde ist.

7. Kraftmessvorrichtung nach einem der vorangehenden Ansprüche, **dadurch gekennzeichnet, dass** zwischen Gewindenuten (86; 94) der Gewindeeinrichtung (79) und in die Gewindenuten (86; 94) eingetauchten Gewindeflanken (84; 92) der Gewindeeinrichtung (79) ein Freiraum liegt.

8. Kraftmessvorrichtung nach Anspruch 7, **dadurch gekennzeichnet, dass** der Abstand zwischen Gewindeflanken (92; 84) und Gewindenuten (86; 94) im Bereich zwischen 0,1 mm und 0,2 mm liegt.

9. Kraftmessvorrichtung nach einem der vorangehenden Ansprüche, **dadurch gekennzeichnet, dass** der Verbindungsbereich (64) zwischen der Hülse (21) und dem Kraftaufnehmer (18) an einem Endbereich (70; 72) des Kraftaufnehmers (18) und/oder der Hülse (21) liegt.

10. Kraftmessvorrichtung nach einem der vorangehenden Ansprüche, **dadurch gekennzeichnet, dass** die Gewindeeinrichtung (79) an einem Endbereich (82) der Hülse (21) angeordnet ist.

11. Kraftmessvorrichtung nach einem der vorangehenden Ansprüche, **dadurch gekennzeichnet, dass** die Hülse (21) als Krafteinleitungseinrichtung (20) zur Einleitung von kräften in den Kraftaufnehmer (18) ausgebildet ist.

12. Kraftmessvorrichtung nach einem der vorangehenden Ansprüche, **dadurch gekennzeichnet, dass** die Hülse (21) mit dem Kraftaufnehmer (18) an dem Verbindungsbereich (64) über einen Pass-Sitz (68) verbunden ist.

13. Kraftmessvorrichtung nach einem der vorangehenden Ansprüche, **dadurch gekennzeichnet, dass** das Biegeelement (38) dem Gewindeeinrichtungs-Anteil (90) des Kraftaufnehmers (18) axial folgend am Kraftaufnehmer (18) angeordnet ist.

14. Kraftmessvorrichtung nach einem der vorangehenden Ansprüche, **dadurch gekennzeichnet, dass** der Gewindeeinrichtungs-Anteil (90) des Kraftaufnehmers (18) außerhalb des Biegeelements (38) angeordnet ist.

15. Kraftmessvorrichtung nach einem der vorangehenden Ansprüche, **dadurch gekennzeichnet, dass** der Kraftaufnehmer (18) ein Montageteil (22) aufweist, welches an dem ersten Element (12) fixierbar ist.

16. Kraftmessvorrichtung nach Anspruch 15, **dadurch gekennzeichnet, dass** das Montageteil (22) einen Fixierungsbereich (32) für das erste Element (12) aufweist.

17. Kraftmessvorrichtung nach Anspruch 16, **dadurch gekennzeichnet, dass** die Gewindeeinrichtung (79) zwischen dem Fixierungsbereich (32) des Montageteils (22) und dem Biegeelement (38) angeordnet ist.

18. Kraftmessvorrichtung nach einem der Ansprüche 15 bis 17, **dadurch gekennzeichnet, dass** das Montageteil (22) einen Anlageflansch (30) für das erste Element (12) aufweist.

19. Kraftmessvorrichtung nach einem der vorangehenden Ansprüche, **dadurch gekennzeichnet, dass** die Gewindeeinrichtung (79) so ausgebildet ist, dass die Hülse (21) in einer Richtung (96) auf den Kraftaufnehmer (18) aufsetzbar ist, welche bei montierter Kraftmessvorrichtung der Abstandsrichtung zwischen dem zweiten Element (14) und dem ersten Element (12) vom zweiten Element (14) zum ersten Element (12) entspricht.

20. Kraftmessvorrichtung nach einem der vorangehenden Ansprüche, **dadurch gekennzeichnet, dass** der Kraftaufnehmer (18) so ausgebildet ist, dass er in einer Richtung (28) in eine Ausnehmung (26) des ersten Elements (12) einschiebbar ist, welche bei montierter Kraftmessvorrichtung der Abstandsrichtung zwischen dem zweiten Element (14) und dem ersten Element (12) vom zweiten Element (14) zum ersten Element (12) entspricht.

21. Kraftmessvorrichtung nach einem der vorangehenden Ansprüche, **dadurch gekennzeichnet, dass** das Biegeelement (38) mindestens näherungsweise hohlzylindrisch ausgebildet ist mit einem Innenraum (40).

22. Kraftmessvorrichtung nach Anspruch 21, **dadurch gekennzeichnet, dass** in dem Innenraum (40) eine Geber-Sensor-Anordnung positioniert ist.

23. Kraftmessvorrichtung nach Anspruch 22, **dadurch gekennzeichnet, dass** entweder ein Geber (52) oder Sensor mit einem Montageteil (22) des Kraftaufnehmers verbunden ist und entweder ein Sensor (60) oder ein Geber mit dem Biegeelement (38) verbunden ist.

24. Kraftmessvorrichtung nach einem der vorangehenden Ansprüche, **dadurch gekennzeichnet, dass** ein Sensor (60) gekapselt ist.

25. Kraftmessvorrichtung nach einem der vorangehenden Ansprüche, **gekennzeichnet durch** eine Zuordnung eines oder mehrerer Abstandshalter (98) zwischen dem ersten Element (12) und dem zweiten Element (14).

26. Kraftmessvorrichtung nach einem der vorangehenden Ansprüche, **dadurch gekennzeichnet, dass** die Anwendung ein Sitz ist, wobei das erste Element (12) und das zweite Element (14) Gestellelemente des Sitzes sind.

27. Kraftmessvorrichtung nach Anspruch 26, **dadurch gekennzeichnet, dass** der Sitz ein Fahrzeugsitz ist.

28. Verwendung der Kraftmessvorrichtung gemäß einem der vorangehenden. Ansprüche zur Kraftbestimmung an einem Sitz.

29. Verwendung nach Anspruch 28, **dadurch gekennzeichnet, dass** der Sitz ein Fahrzeugsitz ist.

## Claims

1. Force measuring device for measuring the force between a first element (12) and a second element (14) of an application, comprising a force sensor (18) with a bending element (38), wherein the force sensor (18) is fixable to the first element (12), a bushing (21), which is connected to the bending element (38) by means of a connection region (64) and which at least partially surrounds the force sensor (18), wherein the bushing (21) is fixable to the second element (14), and a securing device (78) for holding the bushing (21) on the force sensor (18) in the case of breakage of the bending element (38), **characterised in that** the securing device (78) is formed by a threaded arrangement (79) between the bushing (21) and the force sensor (18), which is spaced from the connection region (64), wherein the threaded arrangement (79) is non-load bearing, so that thread elements (84; 86) of the bushing (21) and thread elements (94; 92) of the force sensor (18) do not touch one another and that a fixing region for the second element (14) is arranged on an outer surface of the bushing (21) located at least partially opposite the threaded arrangement (79).

2. Force measuring device according to claim 1, **characterised in that** the threaded arrangement (79) comprises a multiplicity of windings.

3. Force measuring device according to claim 1 or 2, **characterised in that** the bushing (21) is provided with an internal thread (80).

4. Force measuring device according to claim 3, **characterised in that** the thread flanks (84) of the internal thread (80) lie on the same plane as an inside surface (88) of the bushing (21) or are set back in relation to this.

5. Force measuring device according to one of the preceding claims, **characterised in that** the force sensor (18) is provided with an external thread (90).

6. Force measuring device according to claim 5, **characterised in that** the external thread (90) is a standard thread.

7. Force measuring device according to one of the preceding claims, **characterised in that** a free space lies between thread grooves (86; 94) of the threaded arrangement (79) and thread flanks (84; 92) of the threaded arrangement (79) inserted into the thread grooves (86; 94).

8. Force measuring device according to claim 7, **characterised in that** the spacing between thread flanks (92; 84) and thread grooves (86; 94) lies in the range of between 0.1 mm and 0.2 mm.

9. Force measuring device according to one of the preceding claims, **characterised in that** the connection region (64) between the bushing (21) and the force sensor (18) lies at an end region (70; 72) of the force sensor (18) and/or the bushing (21).

10. Force measuring device according to one of the preceding claims, **characterised in that** the threaded arrangement (79) is arranged at an end region (82) of the bushing (21).

11. Force measuring device according to one of the preceding claims, **characterised in that** the bushing (21) is configured as a force introduction device (20) for introducing forces into the force sensor (18).

12. Force measuring device according to one of the preceding claims, **characterised in that** the bushing (21) is connected to the force sensor (18) at the connection region (64) by means of a press fit (68).

13. Force measuring device according to one of the preceding claims, **characterised in that** the bending element (38) is arranged on the force sensor (18) to axially follow the threaded arrangement component (90) of the force sensor (18).

14. Force measuring device according to one of the preceding claims, **characterised in that** the threaded arrangement component (90) of the force sensor (18) is arranged outside the bending element (38).

15. Force measuring device according to one of the preceding claims, **characterised in that** the force sensor (18) has an assembly part (22), which is fixable to the first element (12).

16. Force measuring device according to claim 15, **characterised in that** the assembly part (22) has a fixing region (32) for the first element (12).

17. Force measuring device according to claim 16, **characterised in that** the threaded arrangement (79) is arranged between the fixing region (32) of the assembly part (22) and the bending element (38).

18. Force measuring device according to one of claims 15 to 17, **characterised in that** the assembly part (22) has an abutment flange (30) for the first element (12).

19. Force measuring device according to one of the preceding claims, **characterised in that** the threaded arrangement (79) is configured so that the bushing (21) can be attached onto the force sensor (18) in a direction (96), which corresponds to the direction of spacing between the second element (14) and the first element (12) from the second element (14) towards the first element (12) when the force measuring device is assembled.

20. Force measuring device according to one of the preceding claims, **characterised in that** the force sensor (18) is configured so that it can be inserted into a recess (26) of the first element (12) in a direction (28), which corresponds to the direction of spacing between the second element (14) and the first element (12) from the second element (14) towards the first element (12) when the force measuring device is assembled.

21. Force measuring device according to one of the preceding claims, **characterised in that** the bending element (38) is at least approximately configured in the form of a hollow cylinder with an inside space (40).

22. Force measuring device according to claim 21, **characterised in that** a sensor-sensor arrangement is positioned in the inside space (40).

23. Force measuring device according to claim 22, **characterised in that** either a sensor (52) or sensor is connected to an assembly part (22) of the force sensor and either a sensor (60) or a sensor is connected to the bending element (38).

24. Force measuring device according to one of the preceding claims, **characterised in that** a sensor (60) is encapsulated.

25. Force measuring device according to one of the preceding claims, **characterised by** a provision of one or more spacers (98) between the first element (12) and the second element (14).

26. Force measuring device according to one of the preceding claims, **characterised in that** the application is a seat, wherein the first element (12) and the second element (14) are frame elements of the seat.

27. Force measuring device according to claim 26, **characterised in that** the seat is a vehicle seat.

28. Use of the force measuring device according to one of the preceding claims for determining the force on a seat.

29. Use according to claim 28, **characterised in that** the seat is a vehicle seat.

## Revendications

1. Dispositif de mesure de force destiné à mesurer la force entre un premier élément (12) et un second élément (14) d'une application, comprenant un récepteur de force (18) avec un élément de flexion (38), sachant que le récepteur de force (18) peut être fixé sur le premier élément (12), une douille (21) qui est reliée à l'élément de flexion (38) par une zone de liaison (64) et qui entoure au moins partiellement le récepteur de force (18), sachant que la douille (21) peut être fixée sur le second élément (14), et un dispositif de blocage (78) pour le maintien de la douille (21) sur le récepteur de force (18) en cas de rupture de l'élément de flexion (38), **caractérisé en ce que** le dispositif de blocage (78) est constitué d'un dispositif fileté (79) entre la douille (21) et le récepteur de force (18) qui est espacé de la zone de liaison (64), sachant que le dispositif fileté (79) n'est pas porteur, de sorte que des éléments filetés (84 ; 86) de la douille (21) et des éléments filetés (94 ; 92) du récepteur de force (18) ne se touchent pas et qu'une zone de fixation pour le second élément (14) soit disposée sur un côté extérieur de la douille (21) au moins en partie en face du dispositif fileté (79).

2. Dispositif de mesure de force selon la revendication 1, **caractérisé en ce que** le dispositif fileté (79) comporte une pluralité d'enroulements.

3. Dispositif de mesure de force selon la revendication 1 ou 2, **caractérisé en ce que** la douille (21) est pourvue d'un filetage intérieur (80).

4. Dispositif de mesure de force selon la revendication 3, **caractérisé en ce que** des flancs (84) du filetage intérieur (80) se situent au même niveau qu'un côté intérieur (88) de la douille (21) ou sont placés en retrait par rapport à celui-ci.

5. Dispositif de mesure de force selon l'une quelconque des revendications précédentes, **caractérisé en ce que** le récepteur de force (18) est pourvu d'un filetage extérieur (90).

6. Dispositif de mesure de force selon la revendication 5, **caractérisé en ce que** le filetage extérieur (90) est un filetage normalisé.

7. Dispositif de mesure de force selon l'une quelconque des revendications précédentes, **caractérisé en ce qu'**un espace libre se trouve entre des rainures filetées (86 ; 94) du dispositif fileté (79) et des flancs filetés (84 ; 92) enfoncés dans les rainures filetées (86 ; 94) du dispositif fileté (79).

8. Dispositif de mesure de force selon la revendication 7, **caractérisé en ce que** la distance entre des flancs filetés (92 ; 84) et des rainures filetées (86 ; 94) est comprise dans la plage entre 0,1 et 0,2 mm.

9. Dispositif de mesure de force selon l'une quelconque des revendications précédentes, **caractérisé en ce que** la zone de liaison (64) entre la douille (21) et le récepteur de force (18) se situe sur une zone d'extrémité (70 ; 72) du récepteur de force (18) et/ou de la douille (21).

10. Dispositif de mesure de force selon l'une quelconque des revendications précédentes, **caractérisé en ce que** le dispositif fileté (79) est disposé sur une zone d'extrémité (82) de la douille (21).

11. Dispositif de mesure de force selon l'une quelconque des revendications précédentes, **caractérisé en ce que** la douille (21) est réalisée comme un dispositif d'introduction de force (20) destiné à introduire des forces dans le récepteur de force (18).

12. Dispositif de mesure de force selon l'une quelconque des revendications précédentes, **caractérisé en ce que** la douille (21) est reliée au récepteur de force (18) sur la zone de liaison (64) par un ajustement de précision (68).

13. Dispositif de mesure de force selon l'une quelconque des revendications précédentes, **caractérisé en ce que** l'élément de flexion (38) est disposé sur le récepteur de force (18) de manière à suivre axialement la part du dispositif fileté (90) du récepteur de force (18).

14. Dispositif de mesure de force selon l'une quelconque des revendications précédentes, **caractérisé en ce que** la part de dispositif fileté (90) du récepteur de force (18) est disposée en dehors de l'élément de flexion (38).

15. Dispositif de mesure de force selon l'une quelconque des revendications précédentes, **caractérisé en ce que** le récepteur de force (18) présente une partie de montage (22) qui peut être fixée sur le premier élément (12).

16. Dispositif de mesure de force selon la revendication 15, **caractérisé en ce que** la partie de montage (22) présente une zone de fixation (32) pour le premier élément (12).

17. Dispositif de mesure de force selon la revendication 16, **caractérisé en ce que** le dispositif fileté (79) est disposé entre la zone de fixation (32) de la partie de montage (22) et l'élément de flexion (38).

18. Dispositif de mesure de force selon l'une quelconque des revendications 15 à 17, **caractérisé en ce que** la partie de montage (22) présente une bride d'appui (30) pour le premier élément (12).

19. Dispositif de mesure de force selon l'une quelconque des revendications précédentes, **caractérisé en ce que** le dispositif fileté (79) est réalisé de sorte que la douille (21) puisse être placée dans une direction (96) sur le récepteur de force (18) qui correspond au sens d'écartement entre le second élément (14) et le premier élément (12) du second élément (14) au premier élément (12) en cas de dispositif de mesure de force monté.

20. Dispositif de mesure de force selon l'une quelconque des revendications précédentes, **caractérisé en ce que** le récepteur de force (18) est réalisé de sorte qu'il puisse être enfoncé dans un sens (28) dans un évidement (26) du premier élément (12), qui correspond au sens d'écartement entre le second élément (14) et le premier élément (12) du second élément (14) au premier élément (12) en cas de dispositif de mesure de force monté.

21. Dispositif de mesure de force selon l'une quelconque des revendications précédentes, **caractérisé en ce que** l'élément de flexion (38) est réalisé au moins approximativement de manière cylindrique et creuse avec un espace intérieur (40).

22. Dispositif de mesure de force selon la revendication 21, **caractérisé en ce qu'**un ensemble de capteur-transmetteur est positionné dans l'espace intérieur (40).

23. Dispositif de mesure de force selon la revendication 22, **caractérisé en ce qu'**un transmetteur (52) ou un capteur est relié à une partie de montage (22) du récepteur de force et un capteur (60) ou un transmetteur est relié à l'élément de flexion (38).

24. Dispositif de mesure de force selon l'une quelconque des revendications précédentes, **caractérisé en ce qu'**un capteur (60) est capsulé.

25. Dispositif de mesure de force selon l'une quelconque des revendications précédentes, **caractérisé par** une association d'un ou de plusieurs dispositifs d'écartement (98) entre le premier élément (12) et le second élément (14).

26. Dispositif de mesure de force selon l'une quelconque des revendications précédentes, **caractérisé en ce que** l'application est un siège, sachant que le premier élément (12) et le second élément (14) sont des éléments de châssis du siège.

27. Dispositif de mesure de force selon la revendication 26, **caractérisé en ce que** le siège est un siège de véhicule.

28. Utilisation du dispositif de mesure de force selon l'une quelconque des revendications précédentes, pour la détermination de la force sur un siège.

29. Utilisation selon la revendication 28, **caractérisée en ce que** le siège est un siège de véhicule.
